# EUROPEAN PATENT SPECIFICATION

(11) **EP 3 965 397 B1**
(45) Date of publication and mention of the grant of the patent: **24.09.2025**
(21) Application number: 20821725.7
(22) Date of filing: 01.04.2020
(51) Int. Cl.: H04L 45/50, H04L 45/00, H04L 45/033, H04L 12/46

(54) **METHOD FOR ESTABLISHING NON-ETHERNET SERVICE, AND NETWORK DEVICES**
VERFAHREN ZUR HERSTELLUNG VON NICHT-ETHERNET-DIENSTEN UND NETZWERKVORRICHTUNGEN
PROCÉDÉ D'ÉTABLISSEMENT DE SERVICE NON-ETHERNET, ET DISPOSITIFS DE RÉSEAU

(30) Priority: 14.06.2019 CN 201910518143
(43) Date of publication of application: 09.03.2022
(73) Proprietor: Huawei Technologies Co., Ltd., Shenzhen, Guangdong 518129 (CN)
(72) Inventor: ZHANG, Hua, Shenzhen, Guangdong 518129 (CN); WANG, Haibo, Shenzhen, Guangdong 518129 (CN)
(74) Representative: Pfenning, Meinig & Partner mbB
(86) International application number: PCT/CN2020/082835
(87) International publication number: WO 2020/248662

(56) References cited:
- CN-A- 1 601 982
- CN-A- 101 572 651
- US-A1- 2017 331 720
- US-A1- 2018 109 400
- US-B1- 10 250 552
- RABADAN J ET AL: "IP Prefix Advertisement in EVPN; draft-ietf-bess-evpn-prefix-advertisement-11.txt", IP PREFIX ADVERTISEMENT IN EVPN; DRAFT-IETF-BESS-EVPN-PREFIX-ADVERTISEMENT-11.TXT; INTERNET-DRAFT: BESS WORKGROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 11, 18 May 2018 (2018-05-18), pages 1 - 36, XP015126445
- SAJASSI A ET AL: "BGP MPLS-Based Ethernet VPN; rfc7432.txt", BGP MPLS-BASED ETHERNET VPN; RFC7432.TXT, INTERNET ENGINEERING TASK FORCE, IETF; STANDARD, INTERNET SOCIETY (ISOC) 4, RUE DES FALAISES CH- 1205 GENEVA, SWITZERLAND, 18 February 2015 (2015-02-18), pages 1 - 56, XP015104549
- S. BOUTROS ET AL.: "Virtual Private Wire Service Support in Ethernet VPN", INTERNET ENGINEERING TASK FORCE (IETF) REQUEST FOR COMMENTS: 8214, 23 August 2017 (2017-08-23), pages 1 - 17, XP015121147

## Description

This application claims priority to Chinese Patent Application No. CN 201910518143.4, filed with the Chinese Patent Office on June 14, 2019 and entitled "METHOD FOR ESTABLISHING NON-ETHERNET SERVICE AND NETWORK DEVICE".

### TECHNICAL FIELD

This application relates to the field of communication technologies, and in particular, to two methods for establishing a non-Ethernet service and corresponding network devices and computer-readable storage mediums.

### BACKGROUND

An Ethernet virtual private network (Ethernet Virtual Private Network, EVPN) is a layer 2 virtual private network (Virtual Private Network, VPN) technology. The EVPN can implement media access control (Media Access Control, MAC) layer management and load balancing of virtual lease line (virtual lease line, VLL) services. The EVPN may further allow that a full connection does not need to be established between provider edge (Provider Edge) devices, and only a reflector needs to be deployed to reflect an EVPN route. The EVPN may further unify a control plane of a layer 3 VPN (L3VPN for short) and a control plane of a layer 2 VPN (L2VPN for short).

However, currently, the EVPN does not support non-Ethernet services (such as time division multiplexing (Time Division Multiplexing, TDM) and an asynchronous transfer mode (Asynchronous Transfer Mode, ATM)). If both an Ethernet service and the non-Ethernet service exist on a network, a device in the network needs to support a protocol related to the Ethernet service and a protocol related to the non-Ethernet service. Because the non-Ethernet service and the Ethernet service have different configuration manners, configuration models, and the like, service negotiation costs are high, and flexible negotiation is difficult to implement.

United States patent US 10 250 552 B1 discuss various embodiments how EVPN can be used to offer a multi-homed L3VPN service leveraging its Layer 2 access redundancy. The solution offers single IP peering to the Customer Edge (CE) nodes, rapid failure detection, minimal fail-over time and make-before-break paradigm for maintenance.

RABADAN J ET AL: "IP Prefix Advertisement in EVPN; draft-ietf-bess-evpn-prefix-advertisement-11.txt", defines a new EVPN route type for the advertisement of IP Prefixes and explains some user-case examples where this new route-type is used.

SAJASSI A ET AL: "BGP MPLS-based Ethernet VPN; rfc7432.txt", describes procedures for BGP MPLS-based Ethernet VPNs (EVPN). The procedures described meet the requirements specified in RFC 7209 - "Requirements for Ethernet VPN (EVPN)".

### SUMMARY

This application provides two methods for establishing a non-Ethernet service and corresponding network devices and computer-readable storage mediums, to reduce service establishment costs and implement flexible establishment of the non-Ethernet service. The invention is defined by the appended claims.

According to a first aspect, an embodiment of this application provides a method for establishing a non-Ethernet service. The method includes: A first network device receives a border gateway protocol BGP message sent by a second network device, where the BGP message carries Ethernet virtual private network EVPN routing information, the EVPN routing information includes first indication information, the first indication information is used to indicate a service type of a target non-Ethernet service, and the target non-Ethernet service is a non-Ethernet service expected to be established by the second network device. The first network device determines the service type of the target non-Ethernet service based on the first indication information. The first network device establishes the target non-Ethernet service with the second network device based on the service type of the target non-Ethernet service.

In the foregoing technical solution, a non-Ethernet service negotiation process is performed by using a protocol of an Ethernet service, and the non-Ethernet service is established. In this way, a network device in a system can support establishment of the non-Ethernet service when only the related protocol supporting the Ethernet service is configured. Therefore, the foregoing technical solution can reduce service establishment costs, and implement flexible establishment of the non-Ethernet service.

In a specific design, the EVPN routing information further includes EVPN network layer reachability information NLRI, and the EVPN NLRI is used to advertise an Ethernet auto-discovery route.

The EVPN NLRI used in the foregoing technical solution is existing EVPN NLRI dedicated for the Ethernet auto-discovery route. In other words, the foregoing technical solution reuses the existing EVPN NLRI dedicated for the Ethernet auto-discovery route as EVPN NLRI used for non-Ethernet service negotiation. Therefore, the foregoing technical solution makes a relatively small change to an existing protocol, so that the existing network device supports a non-Ethernet service negotiation method proposed in this application.

In a specific design, the EVPN routing information includes an EVPN layer 2 attributes extended community, and the EVPN layer 2 attributes extended community is used to carry the first indication information.

The foregoing technical solution reuses a reserved field of an existing EVPN layer 2 attributes extended community to perform the non-Ethernet service negotiation and indicate a service type of a non-Ethernet service that needs to be negotiated. Therefore, the foregoing technical solution makes the relatively small change to the existing protocol, so that the existing network device supports the non-Ethernet service negotiation method proposed in this application.

In a specific design, the EVPN routing information includes EVPN NLRI, the EVPN NLRI is used to advertise a service negotiation route, and the EVPN NLRI is used to carry the first indication information.

In the foregoing technical solution, the newly added and dedicated EVPN NLRI is used to perform non-Ethernet service negotiation and indicate a service type of a non-Ethernet service that needs to be negotiated. An additional extended community does not need to be used to perform the non-Ethernet service negotiation and indicate the service type of the non-Ethernet service that needs to be negotiated. Therefore, the foregoing technical solution can reduce signaling overheads, thereby improving a negotiation speed of the non-Ethernet service.

In a specific design, a route type field in the EVPN NLRI indicates that a type of a route advertised by the EVPN NLRI is the service negotiation route.

In a specific design, the EVPN NLRI includes a route distinguisher field, an encapsulation type field, an encapsulation service ID field, and a multi-protocol label switching label field. The encapsulation type field is used to carry the first indication information.

In a specific design, the EVPN routing information further includes second indication information, and the second indication information is used to indicate service parameters of the target non-Ethernet service. That the first network device establishes the target non-Ethernet service with the second network device based on the service type of the target non-Ethernet service includes: The first network device establishes the target non-Ethernet service with the second network device based on the service type of the target non-Ethernet service and the service parameters of the target non-Ethernet service.

In a specific design, the EVPN routing information includes an EVPN emulated parameters extended community, and the EVPN emulated parameters extended community carries the second indication information.

In a specific design, the EVPN routing information further includes third indication information, and the third indication information is used to indicate whether the target non-Ethernet service supports a control word. Before the first network device establishes the target non-Ethernet service with the second network device, the method further includes: The first network device determines that both the target non-Ethernet service and a non-Ethernet service expected to be established by the first network device support the control word, or neither the target non-Ethernet service nor a non-Ethernet service expected to be established by the first network device supports the control word.

In a specific design, the third indication information is carried by the EVPN layer 2 attributes extended community.

The foregoing technical solution reuses the existing EVPN layer 2 attributes extended community to carry the third indication information. Therefore, the foregoing technical solution makes the relatively small change to the existing protocol, so that the existing network device supports the non-Ethernet service negotiation method proposed in this application. In addition, the third indication information and the first indication information may be carried by a same extended community. Therefore, the signaling overheads can be reduced.

In a specific design, the third indication information is carried by the EVPN emulated parameters extended community. In the foregoing technical solution, a same extended community is used to carry the second indication information and the third indication information, so that the signaling overheads can be reduced.

In a specific design, that the first network device establishes the target non-Ethernet service with the second network device based on the service type of the target non-Ethernet service includes: When determining that the service type of the target non-Ethernet service is the same as the service type of the non-Ethernet service expected to be established by the first network device, the first network device establishes the target non-Ethernet service with the second network device.

In a specific design, that the first network device establishes the target non-Ethernet service with the second network device based on the service type of the target non-Ethernet service and the service parameters of the target non-Ethernet service includes: When determining that the service type of the target non-Ethernet service is the same as the service type of the non-Ethernet service expected to be established by the first network device and the parameters of the target non-Ethernet service are the same as parameters of the non-Ethernet service expected to be established by the first network device, the first network device establishes the target non-Ethernet service with the second network device.

According to a second aspect, an embodiment of this application provides a method for establishing a non-Ethernet service. The method includes: A second network device determines a border gateway protocol BGP message, where the BGP message carries Ethernet virtual private network EVPN routing information, the EVPN routing information includes first indication information, the first indication information is used to indicate a service type of a target non-Ethernet service, and the target non-Ethernet service is a non-Ethernet service expected to be established by the second network device with a first network device. The second network device sends the BGP message to the first network device.

In the foregoing technical solution, a non-Ethernet service negotiation process is performed by using a protocol of an Ethernet service, and the non-Ethernet service is established. In this way, a network device in a system can support non-Ethernet service negotiation when only the related protocol supporting the Ethernet service is configured. Therefore, the foregoing technical solution can reduce service negotiation costs and implement flexible negotiation.

In a specific design, the EVPN routing information includes EVPN network layer reachability information NLRI, and the EVPN NLRI is used to advertise an Ethernet auto-discovery route.

The EVPN NLRI used in the foregoing technical solution is existing EVPN NLRI dedicated for the Ethernet auto-discovery route. In other words, the foregoing technical solution reuses the existing EVPN NLRI dedicated for the Ethernet auto-discovery route as EVPN NLRI used for the non-Ethernet service negotiation. Therefore, the foregoing technical solution makes a relatively small change to an existing protocol, so that the existing network device supports a non-Ethernet service negotiation method proposed in this application.

In a specific design, the EVPN routing information includes an EVPN layer 2 attributes extended community, and the EVPN layer 2 attributes extended community is used to carry the first indication information.

The foregoing technical solution reuses a reserved field of an existing EVPN layer 2 attributes extended community to perform the non-Ethernet service negotiation and indicate a service type of a non-Ethernet service that needs to be negotiated. Therefore, the foregoing technical solution makes the relatively small change to the existing protocol, so that the existing network device supports the non-Ethernet service negotiation method proposed in this application.

In a specific design, the EVPN routing information includes EVPN NLRI, the EVPN NLRI is used to advertise a service negotiation route, and the EVPN NLRI is used to carry the first indication information.

In the foregoing technical solution, the newly added and dedicated EVPN NLRI is used to perform non-Ethernet service negotiation and indicate a service type of a non-Ethernet service that needs to be negotiated. An additional extended community does not need to be used to perform the non-Ethernet service negotiation and indicate the service type of the non-Ethernet service that needs to be negotiated. Therefore, the foregoing technical solution can reduce signaling overheads, thereby improving a negotiation speed of the non-Ethernet service.

In a specific design, a route type field in the EVPN NLRI indicates that a type of a route advertised by the EVPN NLRI is the service negotiation route.

In a specific design, the EVPN NLRI includes a route distinguisher field, an encapsulation type field, an encapsulation service ID field, and a multi-protocol label switching label field. The encapsulation type field is used to carry the first indication information.

In a specific design, the EVPN routing information further includes second indication information, and the second indication information is used to indicate service parameters of the target non-Ethernet service.

In a specific design, the EVPN routing information includes an EVPN emulated parameters extended community, and the EVPN emulated parameters extended community carries the second indication information.

In a specific design, the EVPN routing information further includes third indication information, and the third indication information is used to indicate whether the target non-Ethernet service supports a control word.

In a specific design, the third indication information is carried by the EVPN layer 2 attributes extended community.

The foregoing technical solution reuses the existing EVPN layer 2 attributes extended community to carry the third indication information. Therefore, the foregoing technical solution makes the relatively small change to the existing protocol, so that the existing network device supports the non-Ethernet service negotiation method proposed in this application. In addition, the third indication information and the first indication information may be carried by a same extended community. Therefore, the signaling overheads can be reduced.

In a specific design, the third indication information is carried by the EVPN emulated parameters extended community. In the foregoing technical solution, a same extended community is used to carry the second indication information and the third indication information, so that the signaling overheads can be reduced.

According to a third aspect, an embodiment of this application provides a network device. The network device includes units configured to perform the method according to any one of the first aspect or the specific designs of the first aspect.

According to a fourth aspect, an embodiment of this application provides a network device. The network device includes units configured to perform the method according to any one of the second aspect or the specific designs of the second aspect.

According to a fifth aspect, an embodiment of this application provides a network device. The network device includes a processor, and a computer-readable storage medium storing a program executed by the processor, where the program includes instructions for performing the method according to any one of the first aspect or the possible implementations of the first aspect.

According to a sixth aspect, an embodiment of this application provides a network device. The network device includes a processor, and a computer-readable storage medium storing a program executed by the processor, where the program includes instructions for performing the method according to any one of the second aspect or the possible implementations of the second aspect.

According to a seventh aspect, an embodiment of this application provides a computer-readable storage medium. The computer-readable storage medium stores instructions for implementing the method according to any one of the first aspect or the possible implementations of the first aspect.

According to an eighth aspect, an embodiment of this application provides a computer-readable storage medium. The computer-readable storage medium stores instructions for implementing the method according to any one of the second aspect or the possible implementations of the second aspect.

According to a ninth aspect, this application provides a computer program product including instructions. When the computer program product runs on a computer, the computer is enabled to perform the method according to any one of the first aspect or the possible implementations of the first aspect.

According to a tenth aspect, this application provides a computer program product including instructions. When the computer program product runs on a computer, the computer is enabled to perform the method according to any one of the second aspect or the possible implementations of the second aspect.

According to an eleventh aspect, this application provides a method for establishing a non-Ethernet service. The method includes: A second network device sends a border gateway protocol BGP message to a first network device, where the BGP message carries Ethernet virtual private network EVPN routing information, the EVPN routing information includes first indication information, the first indication information is used to indicate a service type of a target non-Ethernet service, and the target non-Ethernet service is a non-Ethernet service expected to be established by the second network device. The first network device receives the BGP message. The first network device determines the service type of the target non-Ethernet service based on the first indication information. The first network device establishes the target non-Ethernet service with the second network device based on the service type of the target non-Ethernet service.

In a specific design, the EVPN routing information further includes EVPN network layer reachability information NLRI, and the EVPN NLRI is used to advertise an Ethernet auto-discovery route.

The EVPN NLRI used in the foregoing technical solution is existing EVPN NLRI dedicated for the Ethernet auto-discovery route. In other words, the foregoing technical solution reuses the existing EVPN NLRI dedicated for the Ethernet auto-discovery route as EVPN NLRI used for non-Ethernet service negotiation. Therefore, the foregoing technical solution makes a relatively small change to an existing protocol, so that the existing network device supports a non-Ethernet service negotiation method proposed in this application.

In a specific design, the EVPN routing information includes an EVPN layer 2 attributes extended community, and the EVPN layer 2 attributes extended community is used to carry the first indication information.

The foregoing technical solution reuses a reserved field of an existing EVPN layer 2 attributes extended community to perform the non-Ethernet service negotiation and indicate a service type of a non-Ethernet service that needs to be negotiated. Therefore, the foregoing technical solution makes the relatively small change to the existing protocol, so that the existing network device supports the non-Ethernet service negotiation method proposed in this application.

In a specific design, the EVPN routing information includes EVPN NLRI, the EVPN NLRI is used to advertise a service negotiation route, and the EVPN NLRI is used to carry the first indication information.

In the foregoing technical solution, the newly added and dedicated EVPN NLRI is used to perform non-Ethernet service negotiation and indicate a service type of a non-Ethernet service that needs to be negotiated. An additional extended community does not need to be used to perform the non-Ethernet service negotiation and indicate the service type of the non-Ethernet service that needs to be negotiated. Therefore, the foregoing technical solution can reduce signaling overheads, thereby improving a negotiation speed of the non-Ethernet service.

In a specific design, a route type field in the EVPN NLRI indicates that a type of a route advertised by the EVPN NLRI is the service negotiation route.

In a specific design, the EVPN NLRI includes a route distinguisher field, an encapsulation type field, an encapsulation service ID field, and a multi-protocol label switching label field. The encapsulation type field is used to carry the first indication information.

In a specific design, the EVPN routing information further includes second indication information, and the second indication information is used to indicate service parameters of the target non-Ethernet service. That the first network device establishes the target non-Ethernet service with the second network device based on the service type of the target non-Ethernet service includes: The first network device establishes the target non-Ethernet service with the second network device based on the service type of the target non-Ethernet service and the service parameters of the target non-Ethernet service.

In a specific design, the EVPN routing information includes an EVPN emulated parameters extended community, and the EVPN emulated parameters extended community carries the second indication information.

In a specific design, the EVPN routing information further includes third indication information, and the third indication information is used to indicate whether the target non-Ethernet service supports a control word. Before the first network device establishes the target non-Ethernet service with the second network device, the method further includes: The first network device determines that both the target non-Ethernet service and a non-Ethernet service expected to be established by the first network device support the control word, or neither the target non-Ethernet service nor a non-Ethernet service expected to be established by the first network device supports the control word.

In a specific design, the third indication information is carried by the EVPN layer 2 attributes extended community.

The foregoing technical solution reuses the existing EVPN layer 2 attributes extended community to carry the third indication information. Therefore, the foregoing technical solution makes the relatively small change to the existing protocol, so that the existing network device supports the non-Ethernet service negotiation method proposed in this application. In addition, the third indication information and the first indication information may be carried by a same extended community. Therefore, the signaling overheads can be reduced.

In a specific design, the third indication information is carried by the EVPN emulated parameters extended community. In the foregoing technical solution, a same extended community is used to carry the second indication information and the third indication information, so that the signaling overheads can be reduced.

In a specific design, that the first network device establishes the target non-Ethernet service with the second network device based on the service type of the target non-Ethernet service includes: When determining that the service type of the target non-Ethernet service is the same as the service type of the non-Ethernet service expected to be established by the first network device, the first network device establishes the target non-Ethernet service with the second network device.

In a specific design, that the first network device establishes the target non-Ethernet service with the second network device based on the service type of the target non-Ethernet service and the service parameters of the target non-Ethernet service includes: When determining that the service type of the target non-Ethernet service is the same as the service type of the non-Ethernet service expected to be established by the first network device and the parameters of the target non-Ethernet service are the same as parameters of the non-Ethernet service expected to be established by the first network device, the first network device establishes the target non-Ethernet service with the second network device.

According to a twelfth aspect, this application provides a communication system. The communication system includes the network device according to the third aspect and the network device according to the third aspect; or the communication system includes the network device according to the fifth aspect and the network device according to the sixth aspect.

### BRIEF DESCRIPTION OF DRAWINGS

FIG. 1 is a schematic diagram of a system to which an embodiment of this application may be applied;
FIG. 2 is a schematic flowchart of non-Ethernet service negotiation according to an embodiment of this application;
FIG. 3 is a schematic diagram of information included in EVPN NLRI dedicated for an Ethernet auto-discovery route;
FIG. 4 is a schematic diagram of information included in an EVPN layer 2 attributes extended community;
FIG. 5 is a schematic diagram of information included in an EVPN emulated parameters extended community;
FIG. 6 is another schematic flowchart of non-Ethernet service negotiation according to an embodiment of this application;
FIG. 7 is a schematic diagram of information included in EVPN NLRI dedicated for a service negotiation route;
FIG. 8 is a schematic diagram of information included in an EVPN emulated parameters extended community;
FIG. 9 is a schematic diagram of information included in an EVPN emulated parameters extended community;
FIG. 10 is a schematic diagram of information included in an EVPN emulated parameters extended community;
FIG. 11 is a schematic diagram of information included in an EVPN emulated parameters extended community;
FIG. 12 is a schematic diagram of information included in an EVPN emulated parameters extended community;
FIG. 13 is a schematic flowchart of a method for establishing a non-Ethernet service according to an embodiment of this application;
FIG. 14 is a schematic structural diagram of a network device according to an embodiment of this application;
FIG. 15 is a schematic structural diagram of a network device according to an embodiment of this application; and
FIG. 16 is a structural block diagram of a network device according to an embodiment of this application.

### DESCRIPTION OF EMBODIMENTS

The following describes technical solutions of this application with reference to accompanying drawings.

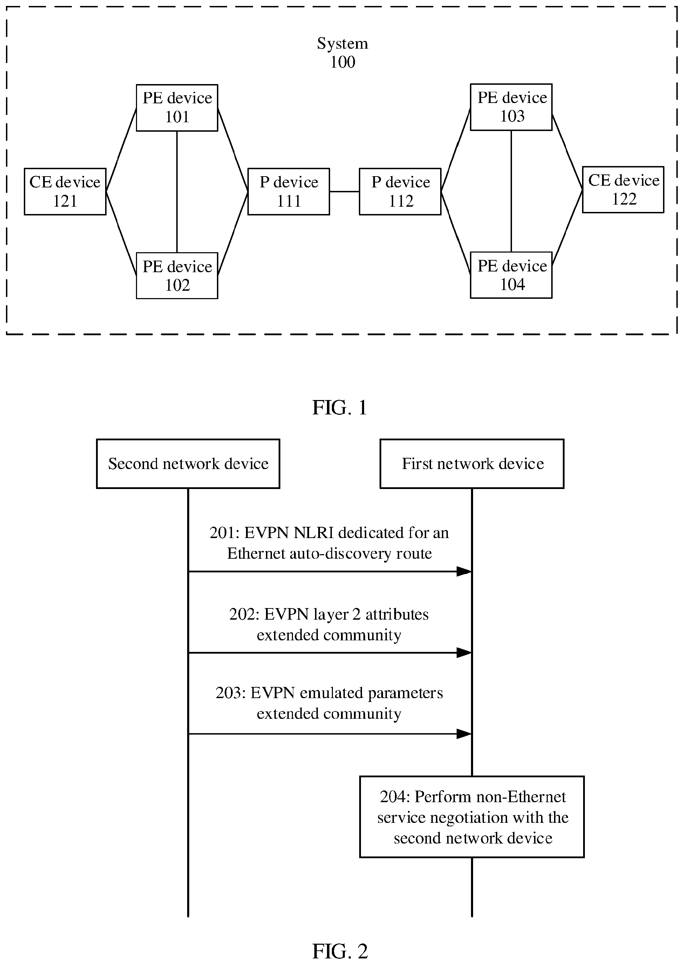

FIG. 1 is a schematic diagram of a system to which an embodiment of this application may be applied. A system 100 shown in FIG. 1 includes a PE device 101, a PE device 102, a PE device 103, a PE device 104, a provider (Provider, P) device 110, a P device 111, a P device 112, a customer edge (Customer Edge, CE) device, a CE device 121, and a CE device 122.

FIG. 2 is a schematic flowchart of non-Ethernet service negotiation according to an embodiment of this application. The method shown in FIG. 2 may be applied to the system 100 shown in FIG. 1.

201: A second network device sends EVPN network layer reachability information (Network Layer Reachability Information, NLRI) dedicated for an Ethernet auto-discovery route (Ethernet Auto-discovery Route) to a first network device. Correspondingly, the first network device receives the EVPN NLRI that is dedicated for the Ethernet auto-discovery route and that is sent by the second network device.

202: The second network device sends an EVPN layer 2 attributes extended community (EVPN Layer 2 Attributes Extended Community) to the first network device. Correspondingly, the first network device receives the EVPN layer 2 attributes extended community sent by the second network device.

The first network device may be the PE device in the system 100 shown in FIG. 1, and the second network device may also be the PE device in the system 100 shown in FIG. 1. For example, in some embodiments, the first network device may be the PE device 101 in the system 100 shown in FIG. 1, and the second network device may be the PE device 102 in the system 100 shown in FIG. 1. For another example, in some embodiments, the first network device may be the PE device 101 in the system 100 shown in FIG. 1, and the second network device may be the PE device 103 in the system 100 shown in FIG. 1.

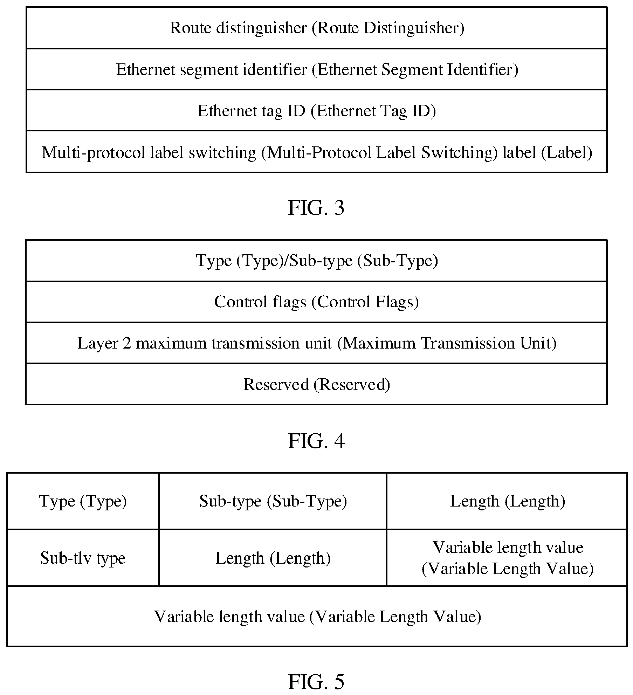

FIG. 3 is a schematic diagram of information included in the EVPN NLRI dedicated for the Ethernet auto-discovery route (Ethernet Auto-Discovery (AD) route). As shown in FIG. 3, the EVPN NLRI dedicated for the Ethernet auto-discovery route includes four fields in total. The four fields are a route distinguisher (Route Distinguisher, RD) field with a length of eight octets (octet), an Ethernet segment identifier (Ethernet Segment Identifier, ESI) field with a length of 10 octets, an Ethernet tag ID (Ethernet Tag ID) field with a length of four octets, and a multi-protocol label switching (Multi-Protocol Label Switching, MPLS) label (Label) field with a length of three octets.

The Ethernet tag ID field is set to a service ID of a non-Ethernet service. The service ID needs to be the same as a remote service ID set in the second network device.

Specific content of other fields except the Ethernet tag ID field in the EVPN NLRI dedicated for the Ethernet auto-discovery route may be consistent with that in a current protocol. For brevity, details are not described herein again.

The EVPN layer 2 attributes extended community includes service type indication information, and the service type indication information is used to indicate a type of a non-Ethernet service expected to be established by the second network device. For ease of description, the non-Ethernet service expected to be established by the second network device is referred to as a second non-Ethernet service below. Correspondingly, a non-Ethernet service expected to be established by the first network device is referred to as a first non-Ethernet service.

FIG. 4 is a schematic diagram of information included in the EVPN layer 2 attributes extended community. As shown in FIG. 4, the EVPN layer 2 attributes extended community includes four fields. The four fields are a type (Type)/sub-type (Sub-Type) field with a length of two octets, a control flags (Control Flags) field with a length of two octets, a layer 2 (Layer 2, L2) maximum transmission unit (Maximum Transmission Unit, MTU) with a length of two octets, and a reserved (Reserved) field with a length of 2 octets.

The control flags field includes a control word indicator bit C, and the control word indicator bit is used in a control word negotiation process. For example, if a value of the control word indicator bit is 1, it indicates that the second non-Ethernet service supports a control word. If the value of the control word indicator bit is 0, it indicates that the second non-Ethernet service does not support the control word.

The first network device may determine whether the first non-Ethernet service supports the control word, and determine a negotiation result based on a received indication result of the control word indicator bit C in the control flags field.

A format of the control flags field is the same as a format of a control flags field in the existing protocol. For brevity, details are not described herein again.

When the second network device negotiates the non-Ethernet service with the first network device, a value of the L2 MTU field in the EVPN layer 2 attributes extended community sent by the second network device to the first network device is all 0s, namely, 0x0000. A setting of the control flags field may be consistent with a setting of a control flags field in an EVPN layer 2 attributes extended community sent in an existing Ethernet service negotiation process. The service type indication information is carried in the reserved field. Different service types correspond to different values. A correspondence between the service type and the value may be shown in Table 1.

**Table 1**

| Value | Service type |
|---|---|
| 0x0001 | Frame relay data link connection identifier (Data Link Connection Identifier, DLCI) (Martini (Martini) mode) (Frame Relay DLCI (Martini Mode)) |
| 0x0002 | ATM adaptation layer (ATM Adaption Layer, AAL) 5 service data unit (service data unit, SDU) virtual channel connection (virtual channel connection, VCC) transport (ATM AAL5 SDU VCC transport) |
| 0x0003 | ATM transparent cell transport (ATM transparent cell transport) |
| 0x0006 | High-level data link control (High-Level Data Link Control, HDLC) |
| 0x0007 | Point to point protocol (Point to Point Protocol, PPP) |
| 0x0008 | Synchronous optical network (Synchronous Optical Network, SONET)/Synchronous digital hierarchy (Synchronous Digital Hierarchy, SDH) circuit emulation over MPLS (SONET/SDH circuit emulation service over MPLS) |
| 0x0009 | ATM N:1 VCC cell transport (ATM n-to-one VCC cell transport) |
| 0x000A | ATM N:1 virtual path connection (Virtual Path Connection, VPC) cell transport (ATM n-to-one VPC cell transport) |
| 0x000B | IP layer 2 transport (IP Layer 2 transport) |
| 0x000C | ATM 1:1 VCC cell mode (ATM one-to-one VCC cell mode) |
| 0x000D | ATM 1:1 VPC cell mode (ATM one-to-one VCC cell mode) |
| 0x000E | ATM AAL5 packet data unit (packet data unit, PDU) VCC transport (ATM AAL5 PDU VCC transport) |
| 0x000F | Frame relay port mode (Frame Relay Port mode) |
| 0x0010 | SONET/SDH circuit emulation over packet (SONET/SDH Circuit Emulation over Packet) |
| 0x0011 | Structure-agnostic E1 over packet (Structure-agnostic E1 over Packet) |
| 0x0012 | Structure-agnostic T1 (DS1) over packet (Structure-agnostic T1 (DS1) over Packet) |
| 0x0013 | Structure-agnostic E3 over packet (Structure-agnostic E3 over Packet) |
| 0x0014 | Structure-agnostic T3 (DS3) over packet (Structure-agnostic T3 (DS3) over Packet) |
| 0x0015 | Circuit emulation over packet switched network (Circuit Emulation Service over Packet Switched Network, CESoPSN) basic mode (CESoPSN basic mode) |
| 0x0016 | TDM over IP (TDM over IP, TDMoIP) AAL 1 mode (TDMoIP ALL1 Mode) |
| 0x0017 | TDM CESoPSN with channel-associated signaling (channel-associated signalling, CAS) (CESoPSN TDM with CAS) |
| 0x0018 | TDMoIP AAL 2 mode (TDMoIP AAL2 Mode) |
| 0x0019 | Frame relay DLCI (Frame Relay DLCI) |

The service type indication information carried in the reserved field in the EVPN layer 2 attributes extended community may be the values (namely, 0x0001 to 0x0019) shown in Table 1. After receiving the EVPN layer 2 attributes extended community, the first network device may determine a service type of the second non-Ethernet service based on a value (namely, the service type indication information) in the reserved field. In addition, because the values in the reserved field indicate the service type of the second non-Ethernet service, the first network device may further determine that a service that needs to be negotiated with the second network device is the non-Ethernet service. In other words, the first network device may determine, based on the received EVPN layer 2 attributes extended community, that the service that needs to be negotiated with the second network device is the non-Ethernet service, and determine the service type of the non-Ethernet service that needs to be negotiated.

203: The second network device sends an EVPN emulated parameters extended community (EVPN emulated parameters extend community) to the first network device. Correspondingly, the first network device receives the EVPN emulated parameters extended community sent by the second network device. The EVPN emulated parameters extended community carries parameter indication information, and the parameter indication information is used to indicate parameters of the second non-Ethernet service.

FIG. 5 is a schematic diagram of information included in the EVPN emulated parameters extended community. As shown in FIG. 5, the EVPN emulated parameters extended community includes six fields. The six fields are a type (Type) field, a sub-type (Sub-Type) field, a length (Length) field, a sub-time length value (time length value, tlv) type (sub-tlv type) field, a length (Length) field, and a variable length value (Variable Length Value) field. The last three fields (namely, the sub-tlv type field, the length field, and the variable length field) may be considered as one sub-tlv. The EVPN emulated parameters extended community shown in FIG. 5 includes only one sub-tlv. In some other embodiments, the EVPN emulated parameters extended community may alternatively include two or more sub-tlvs.

A value of the type field and a value of the sub-type field are preset fixed values. For example, the value of the type field may be 0x06. The length field located after the sub-type field indicates a length of the EVPN emulated parameters extended community.

The parameter indication information may include two parts: a parameter type and a parameter value. A parameter type and a parameter value of each parameter may be carried by one sub-tlv. More specifically, the parameter type may be carried by the sub-tlv type field, and the parameter value may be carried by the variable length value field (namely, a value field of the sub-tlv). A value of the length field located after the sub-tlv type field (namely, a length field of the sub-tlv) is a length of the variable length value field.

Each parameter type may have a corresponding value. The sub-tlv type field may include the value corresponding to the parameter type. Lengths of values corresponding to different parameter types may be different. Table 2 shows a correspondence between the parameter type, the value, and the value length.

**Table 2**

| Value | Length | Parameter type |
|---|---|---|
| 0x01 | 4 | Interface MTU in octets |
| 0x02 | 4 | Maximum number of concatenated ATM cells (Maximum Number of concatenated ATM cells) |
| 0x03 | Up to 82 | Optional interface description string (Optional Interface Description string) |
| 0x04 | 4 | Circuit emulation over packet (Circuit Emulation over Packet, CEP) /TDM payload bytes (CEP/TDM Payload Bytes) |
| 0x05 | 4 | CEP options (CEP options) |
| 0x07 | 6 | CEP/TDM bit-rate (CEP/TDM bit-rate) |
| 0x08 | 4 | Frame-relay DLCI length (Frame-Relay DLCI Length) |
| 0x09 | 4 | Fragmentation indicator (Fragmentation indicator) |
| 0x0A | 4 | Frame check sequence (Frame Check Sequence, FCS) retention indicator (FCS retention indicator) |
| 0x0B | 4/8/12 | TDM options (TDM options) |

After receiving the EVPN emulated parameters extended community, the first network device may obtain the parameter type and the parameter value of the second non-Ethernet service.

203: The first network device performs the non-Ethernet service negotiation with the second network device based on the EVPN layer 2 attributes extended community.

As described above, the first network device may determine, based on the EVPN layer 2 attributes extended community, that the first network device needs to negotiate the non-Ethernet service with the second network device; and determine the service type of the second non-Ethernet service. The first network device may determine the parameter type and the parameter value of the second non-Ethernet service based on the EVPN emulated parameters extended community.

In some implementations, the first network device may perform the non-Ethernet service negotiation with the second network device based on the EVPN layer 2 attributes extended community.

In some other embodiments, the first network device may perform the non-Ethernet service negotiation with the second network device based on the EVPN layer 2 attributes extended community and the EVPN emulated parameters extended community.

For some specific services (such as ATM and the high-level data link control (High-Level Data Link Control, HDLC)), the first network device does not need to compare the parameter value of the non-Ethernet service in a non-Ethernet service negotiation process with the second network device. Therefore, in this case, the first network device may perform the non-Ethernet service negotiation with the second network device based on a cascading parameter, a service type of the first non-Ethernet service, and the service type of the second non-Ethernet service.

In some embodiments, if the first non-Ethernet service supports the control word and the value of the control word indicator bit is 1 (that is, the second non-Ethernet service supports the control word), the negotiation result is that the control word is supported. If the first non-Ethernet service does not support the control word and the value of the control word indicator bit is 0 (that is, the second non-Ethernet service does not support the control word), the negotiation result is that the control word is not supported. The negotiation result is delivered to a forwarding plane. The forwarding plane determines whether to add the control word to a packet based on the negotiation result. If the negotiation result indicates that the control word is supported, the forwarding plane adds the control word to the packet. If the negotiation result indicates that the control word is not supported, the forwarding plane does not add the control word to the packet. If the first non-Ethernet service supports the control word and the value of the control word indicator bit is 0 (that is, the second non-Ethernet service does not support the control word), it may be determined that the non-Ethernet service negotiation performed by the first network device with the second network device fails. If the first non-Ethernet service does not support the control word and the value of the control word indicator bit is 1 (that is, the second non-Ethernet service supports the control word), it may be determined that the non-Ethernet service negotiation performed by the first network device with the second network device fails. For ease of description, this control word negotiation solution is referred to as a control word negotiation solution 1 below.

In some other embodiments, if the first non-Ethernet service supports the control word and the value of the control word indicator bit is 1 (that is, the second non-Ethernet service supports the control word), the negotiation result is that the control word is supported. If the first non-Ethernet service does not support the control word and the value of the control word indicator bit is 0 (that is, the second non-Ethernet service does not support the control word), the negotiation result is that the control word is not supported. The negotiation result is delivered to the forwarding plane. The forwarding plane determines whether to add the control word to the packet based on the negotiation result. If the first non-Ethernet service supports the control word and the value of the control word indicator bit is 0 (that is, the second non-Ethernet service does not support the control word), the negotiation result is that the control word is supported. If the first non-Ethernet service does not support the control word and the value of the control word indicator bit is 1 (that is, the second non-Ethernet service supports the control word), the negotiation result is that the control word is supported. In other words, in the foregoing negotiation solution, as long as one non-Ethernet service supports the control word, the negotiation result is that the control word is supported. If the negotiation result indicates that the control word is supported, the forwarding plane adds the control word to the packet. If the negotiation result indicates that the control word is not supported, the forwarding plane does not add the control word to the packet. For ease of description, this control word negotiation solution is referred to as a control word negotiation solution 2 below.

In some other embodiments, if the first non-Ethernet service supports the control word and the value of the control word indicator bit is 1 (that is, the second non-Ethernet service supports the control word), the negotiation result is that the control word is supported. If the first non-Ethernet service does not support the control word and the value of the control word indicator bit is 0 (that is, the second non-Ethernet service does not support the control word), the negotiation result is that the control word is not supported. The negotiation result is delivered to the forwarding plane. The forwarding plane determines whether to add the control word to the packet based on the negotiation result. If the first non-Ethernet service supports the control word and the value of the control word indicator bit is 0 (that is, the second non-Ethernet service does not support the control word), the negotiation result is that the control word is not supported. If the first non-Ethernet service does not support the control word and the value of the control word indicator bit is 1 (that is, the second non-Ethernet service supports the control word), the negotiation result is that the control word is not supported. In other words, in the foregoing negotiation solution, as long as one non-Ethernet service does not support the control word, the negotiation result is that the control word is not supported. If the negotiation result indicates that the control word is supported, the forwarding plane adds the control word to the packet. If the negotiation result indicates that the control word is not supported, the forwarding plane does not add the control word to the packet. For ease of description, this control word negotiation solution is referred to as a control word negotiation solution 3 below.

The first network device and the second network device may negotiate in advance or preset to use one of the control word negotiation solution 1 to the control word negotiation solution 3.

When the first network device and the second network device use the control word negotiation solution 1, the first network device may perform the non-Ethernet service negotiation with the second network device based on the cascading parameter, the service type of the first non-Ethernet service, the service type of the second non-Ethernet service, whether the first non-Ethernet service supports the control word, and the indication result that is of the control word indicator bit and that is received by the first network device. The indication result of the control word indicator bit may be that the second non-Ethernet service supports the control word or the second non-Ethernet service does not support the control word.

Specifically, the first network device may determine whether the cascading parameter meets a preset value, whether the service type of the first non-Ethernet service is the same as the service type of the second non-Ethernet service, and whether a situation that the first non-Ethernet service supports or does not support the control word is the same as a situation that the second non-Ethernet service indicated by the control word indicator bit supports or does not support the control word. The first network device may determine, based on determining results, whether the non-Ethernet service negotiation with the second network device succeeds. Whether the situation that the first non-Ethernet service supports or does not support the control word is the same as the situation that the second non-Ethernet service indicated by the control word indicator bit supports or does not support the control word means: If the first non-Ethernet service supports the control word and the indication result of the control word indicator bit is that the second non-Ethernet service supports the control word, the situation that the first non-Ethernet service supports or does not support the control word is the same as the situation whether the second non-Ethernet service indicated by the control word indicator bit supports or does not support the control word; if the first non-Ethernet service does not support the control word, and the indication result of the control word indicator bit is that the second non-Ethernet service does not support the control word, the situation that the first non-Ethernet service supports or does not support the control word is the same as the situation whether the second non-Ethernet service indicated by the control word indicator bit supports or does not support the control word; if the first non-Ethernet service supports the control word, and the indication result of the control word indicator bit is that the second non-Ethernet service does not support the control word, the situation that the first non-Ethernet service supports or does not support the control word is not the same as the situation that the second non-Ethernet service indicated by the control word indicator bit supports or does not support the control word; and if the first non-Ethernet service does not support the control word, and the indication result of the control word indicator bit is that the second non-Ethernet service supports the control word, the situation that the first non-Ethernet service supports or does not support the control word is not the same as the situation that the second non-Ethernet service indicated by the control word indicator bit supports or does not support the control word.

If all the foregoing determining results are yes, the first network device may determine that the non-Ethernet service negotiation with the second network device succeeds. In other words, when determining that the cascading parameter meets the preset value, the service type of the first non-Ethernet service is the same as the service type of the second non-Ethernet service, and the situation that the first non-Ethernet service supports or does not support the control word is the same as the situation that the second non-Ethernet service indicated by the control word indicator bit supports or does not support the control word, the first network device determines that the non-Ethernet service negotiation with the second network device succeeds.

If any one of the foregoing determining results is no, the first network device may determine that the non-Ethernet service negotiation with the second network device fails. In other words, when determining that the cascading parameter does not meet the preset value, the first network device may determine that the non-Ethernet service negotiation with the second network device fails. When determining that the service type of the first non-Ethernet service is different from the service type of the second non-Ethernet service, the first network device may determine that the non-Ethernet service negotiation with the second network device fails. When determining that the first non-Ethernet service does not support the control word, and the indication result of the control word indicator bit is that the second non-Ethernet service supports the control word, the first network device may determine that the non-Ethernet service negotiation with the second network device fails. When determining that the first non-Ethernet service supports the control word, and the indication result of the control word indicator bit is that the second non-Ethernet service does not support the control word, the first network device may determine that the non-Ethernet service negotiation with the second network device fails.

In the control word negotiation solution 1, whether the first non-Ethernet service supports the control word and the indication result of the control word indicator bit may directly affect whether the non-Ethernet service negotiation succeeds. However, in the control word negotiation solution 2 and the control word negotiation solution 3, whether the first non-Ethernet service supports the control word and the indication result of the control word indicator bit do not affect the non-Ethernet service negotiation. Therefore, when the first network device and the second network device use the control word negotiation solution 2 or the control word negotiation solution 3, the first network device may perform the non-Ethernet service negotiation with the second network device based on the cascading parameter, the service type of the first non-Ethernet service, and the service type of the second non-Ethernet service. Specifically, the first network device may determine whether the cascading parameter meets the preset value and whether the service type of the first non-Ethernet service is the same as the service type of the second non-Ethernet service. The first network device may determine, based on the determining results, whether the non-Ethernet service negotiation with the second network device succeeds. If all the foregoing determining results are yes, the first network device may determine that the non-Ethernet service negotiation with the second network device succeeds. In other words, when determining that the cascading parameter meets the preset value and the service type of the first non-Ethernet service is the same as the service type of the second non-Ethernet service, the first network device determines that the non-Ethernet service negotiation with the second network device succeeds. If any one of the foregoing determining results is no, the first network device may determine that the non-Ethernet service negotiation with the second network device fails. In other words, when determining that the cascading parameter does not meet the preset value, the first network device may determine that the non-Ethernet service negotiation with the second network device fails. When determining that the service type of the first non-Ethernet service is different from the service type of the second non-Ethernet service, the first network device may determine that the non-Ethernet service negotiation with the second network device fails.

In some embodiments, the first network device needs to compare a parameter value of the first non-Ethernet service with the parameter value of the second non-Ethernet service. For example, for services such as the structure-agnostic E3 over packet service, the structure-agnostic T1 (DS1) over packet service, or the structure-agnostic E1 over packet service, the first network device further needs to compare the parameter value of the first non-Ethernet service with the parameter value of the second non-Ethernet service. In this case, if the first network device determines that the parameter type of the second non-Ethernet service is the same as a parameter type of the first non-Ethernet service, and the parameter value of the second non-Ethernet service is the same as the parameter value of the first non-Ethernet service, the first network device may determine that the non-Ethernet service negotiation with the second network device succeeds. If the first network device determines that the parameter type of the second non-Ethernet service is different from the parameter type of the first non-Ethernet service, or the parameter of the second non-Ethernet service is different from the parameter of the first non-Ethernet service, the first network device may determine that the non-Ethernet service negotiation with the second network device fails.

It may be understood that before the first network device performs the non-Ethernet service negotiation with the second network device, the first network device first needs to determine that the first network device and the second network device belong to a same VPN instance.

Specifically, the first network device may determine, based on an import target (Import Target) and an export target (Export Target), whether the first network device and the second network device belong to the same VPN instance. If the import target matches the export target, the first network device and the second network device belong to the same VPN instance. If the import target does not match the export target, the first network device and the second network device do not belong to the same VPN instance. Ethernet service negotiation and non-Ethernet service negotiation are performed between different network devices in a same VPN instance. If the first network device and the second network device do not belong to the same VPN instance, the first network device does not need to perform the non-Ethernet service negotiation with the second network device. Therefore, only when the first network device and the second network device belong to the same VPN instance, the first network device may perform the non-Ethernet service negotiation with the second network device based on the EVPN layer 2 attributes extended community, or the EVPN layer 2 attributes extended community and the EVPN emulated parameters extended community.

The import target is determined by the first network device. The export target is determined by the second network device. After determining the export target, the second network device may advertise the export target as an extended community of a border gateway protocol (Border Gateway Protocol, BGP) along with a route. The first network device may receive the export target advertised by the second network device.

Whether the import target matches the export target means that there is an intersection between the import target and the export target. If the intersection exists between the import target and the export target, the import target matches the export target. If there is no intersection between the import target and the export target, the import target does not match the export target.

For example, if the import target is 100:1, 200: 1, and 300:1 and the export target is 100:1, 400: 1, and 500: 1, the import target matches the export target. In this case, the first network device and the second network device belong to the same VPN instance. If the import target is 200:1, 300: 1, and 400:1 and the export target is 100:1, 500: 1, and 600:1, the import target does not match the export target. In this case, the first network device and the second network device belong to different VPN instances.

The method shown in FIG. 2 reuses the existing EVPN NLRI dedicated for the Ethernet auto-discovery route, and transmits information required for the non-Ethernet service negotiation by using the EVPN layer 2 attributes extended community and the EVPN emulated parameters extended community. In other words, in the method shown in FIG. 2, the non-Ethernet service negotiation process is performed by using a protocol of an Ethernet service. In this way, a network device in a system can support the non-Ethernet service negotiation when only the related protocol supporting the Ethernet service is configured. Therefore, the method shown in FIG. 2 can reduce service negotiation costs and implement flexible negotiation.

It may be understood that the non-Ethernet service negotiated by the first network device with the second network device is a to-be-established non-Ethernet service. If the negotiation succeeds, the non-Ethernet service is established. If the negotiation fails, the non-Ethernet service is not established.

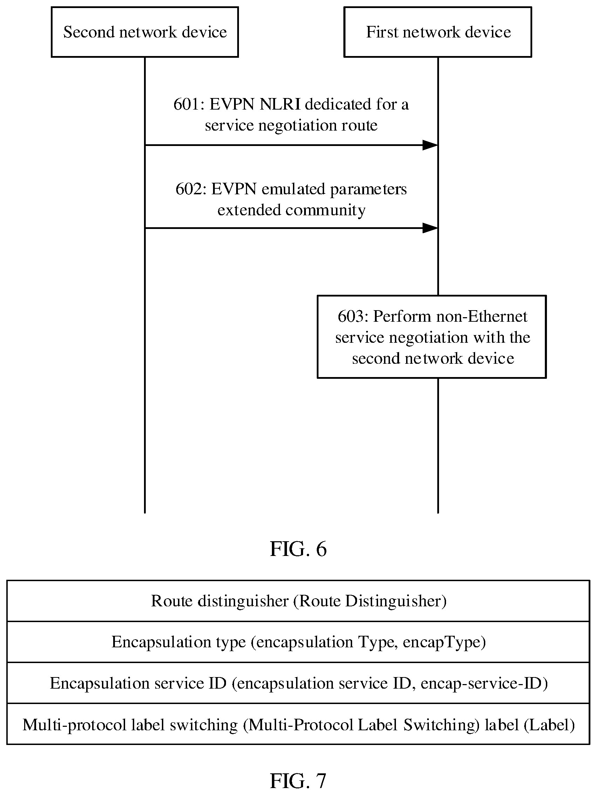

FIG. 6 is another schematic flowchart of non-Ethernet service negotiation according to an embodiment of this application. The method shown in FIG. 6 may be applied to the system 100 shown in FIG. 1.

601: A second network device sends EVPN NLRI dedicated for a service negotiation route to a first network device. Correspondingly, the first network device receives the EVPN NLRI that is dedicated for the service negotiation route and that is sent by the second device.

Similar to the method shown in FIG. 2, the first network device in the method shown in FIG. 6 may be the PE device in the system 100 shown in FIG. 1, and the second network device may also be the PE device in the system 100 shown in FIG. 1. For example, in some embodiments, the first network device may be the PE device 101 in the system 100 shown in FIG. 1, and the second network device may be the PE device 102 in the system 100 shown in FIG. 1. For another example, in some embodiments, the first network device may be the PE device 101 in the system 100 shown in FIG. 1, and the second network device may be the PE device 103 in the system 100 shown in FIG. 1.

FIG. 7 is a schematic diagram of information included in the EVPN NLRI dedicated for the service negotiation route. As shown in FIG. 7, the service negotiation route NLRI includes four fields in total. The four fields are an RD field with a length of 8 octets, an encapsulation type (encapsulation Type, encapType) field with a length of 2 octets, an encapsulation service ID (encapsulation service ID, encap-service-ID) field with a length of 4 octets, and an MPLS label (Label) field with a length of 3 octets.

It can be seen that the EVPN NLRI dedicated for the service negotiation route shown in FIG. 7 is different from EVPN NLRI dedicated for five types of routes defined in an existing EVPN. The EVPN NLRI dedicated for five types of routes includes EVPN NLRI dedicated for an Ethernet auto-discovery route (Ethernet Auto-Discovery (AD) route), EVPN NLRI dedicated for a MAC/IP advertisement route (MAC/IP Advertisement route), EVPN NLRI dedicated for an inclusive multicast Ethernet tag route (Inclusive Multicast Ethernet Tag route), EVPN NLRI dedicated for an Ethernet segment route (Ethernet Segment route), and EVPN NLRI dedicated for an IP prefix route (IP Prefix route). In other words, the method shown in FIG. 6 proposes newly defined NLRI, namely, the service negotiation route NLRI shown in FIG. 7. The EVPN NLRI dedicated for the service negotiation route may be used for a non-Ethernet service negotiation process.

The encapType field in the EVPN NLRI dedicated for the service negotiation route shown in FIG. 7 may be used to carry service type indication information. Different service types correspond to different values. A correspondence between the service type and the value may be shown in Table 1.

The encap-service-ID field in the EVPN NLRI dedicated for the service negotiation route may be used to carry a service identifier. Between two network devices that need to negotiate a non-Ethernet service, the service identifier carried in the encap-service-ID field needs to be the same as a remote encap-service-ID set by a local end, and vice versa. In other words, the encap-service-ID in the EVPN NLRI that is dedicated for the service negotiation route shown in FIG. 7 and that is sent by the second network device is the same as the remote encap-service-ID set by the second network device. A function of the RD field in the EVPN NLRI dedicated for the service negotiation route is the same as a function of the RD field in the EVPN NLRI dedicated for the Ethernet auto-discovery route shown in FIG. 3. A function of the MPLS label field in the EVPN NLRI dedicated for the service negotiation route is the same as a function of the MPLS label field in the EVPN NLRI dedicated for the service negotiation route shown in FIG. 3. For brevity, details are not described herein again.

It may be understood that, the EVPN NLRI dedicated for the service negotiation route shown in FIG. 7 is only a possible implementation of EVPN NLRI dedicated for a route that is used to negotiate the non-Ethernet service and that is different from existing EVPN NLRI dedicated for a route. The EVPN NLRI dedicated for the route that is used to negotiate the non-Ethernet service and that is different from the existing EVPN NLRI dedicated for the route may also be implemented in another manner. For example, an Ethernet tag ID field is added to the EVPN NLRI dedicated for the service negotiation route shown in FIG. 7. For another example, an Ethernet segment identifier field is added to the EVPN NLRI dedicated for the service negotiation route shown in FIG. 7. For another example, in some implementations, a name of the field used to carry the service type indication information may be different from the encapType shown in FIG. 7. Similarly, a name of the field used to carry the service identifier may be different from the encap-service-ID shown in FIG. 7.

602: The second network device sends an EVPN emulated parameters extended community (EVPN emulated parameters extend community) to the first network device. Correspondingly, the first network device receives the EVPN emulated parameters extended community sent by the second network device. The EVPN emulated parameters extended community carries parameter indication information, and the parameter indication information is used to indicate parameters of the second non-Ethernet service.

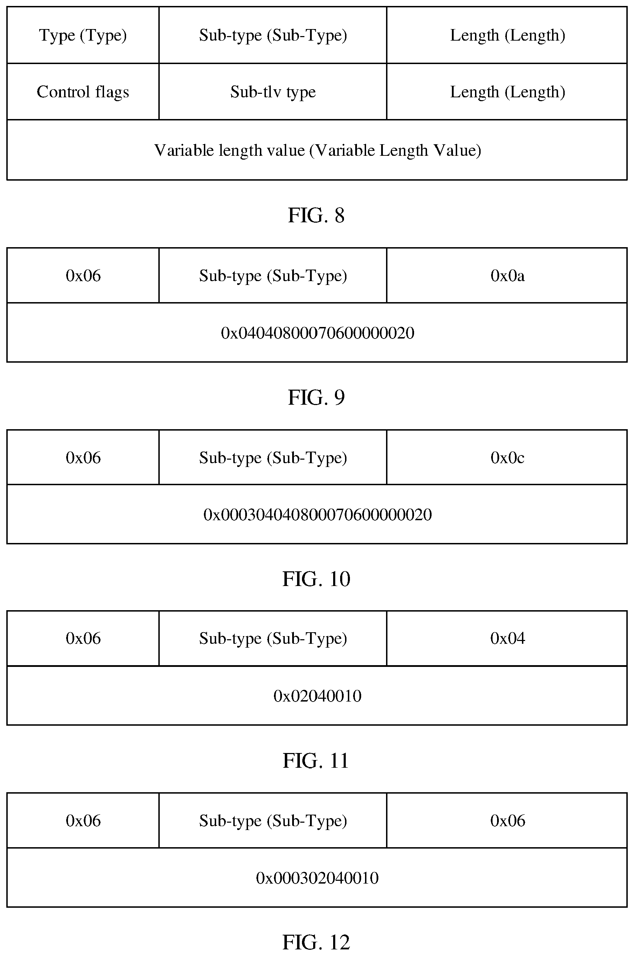

FIG. 8 is a schematic diagram of information included in the EVPN emulated parameters extended community sent by the second network device to the first network device in step 602. It can be learned that compared with the EVPN emulated parameters extended community sent by the second network device to the first network device in step 203 of the method shown in FIG. 2 (namely, the EVPN emulated parameters extended community shown in FIG. 5), a control flags (Control Flags) field is added to the EVPN emulated parameters extended community shown in FIG. 8. Content of the control flags field is the same as content included in the control flags field included in the EVPN layer 2 attributes extended community shown in FIG. 4. In other words, the control flags field in the EVPN emulated parameters extended community shown in FIG. 8 also includes one control word indicator bit C, and the control word indicator bit is used to indicate whether the second network device supports a control word (control word). For example, if a value of the control word indicator bit is 1, it indicates that the second network device supports the control word. In this case, the second network device has a capability of sending and receiving the control word. For another example, if the value of the control word indicator bit is 0, it indicates that the second network device does not support the control word. In this case, the second network device does not have the capability of sending and receiving the control word.

In some embodiments, both the first network device and the second network device support the control word. In some embodiments, one of the first network device and the second network device supports the control word. In some embodiments, neither the first network device nor the second network device supports the control word.

Functions of other fields except the control flags field in the EVPN emulated parameters extended community shown in FIG. 8 are the same as the functions of same fields in the EVPN emulated parameters extended community shown in FIG. 5. For brevity, details are not described herein.

603: The first network device may perform the non-Ethernet service negotiation with the second network device based on the EVPN NLRI dedicated for the service negotiation route.

It can be learned that the information used for the non-Ethernet service negotiation in the method shown in FIG. 6 is the same as the information used for the non-Ethernet service negotiation in the method shown in FIG. 2. A difference is that messages used to carry the information are different. Therefore, for a specific implementation of the non-Ethernet service negotiation performed by the first network device with the second network device in step 603, refer to the description in the method shown in FIG. 2. For brevity, details are not described herein again.

The following uses the structure-agnostic E1 over packet (Structure-agnostic E1 over Packet, SATOP) service as an example to describe the non-Ethernet service negotiation process between the first network device and the second network device with reference to the methods in FIG. 2 and FIG. 6.

It is assumed that the first network device performs SATOP service negotiation with the second network device by using the method shown in FIG. 2.

Specific content of each field in the EVPN network layer reachability information (Network Layer Reachability Information, NLRI) that is dedicated for the Ethernet auto-discovery route (Ethernet Auto-discovery Route) and that is sent by the second network device to the first network device is consistent with specific content of each field in the EVPN NLRI dedicated for the Ethernet auto-discovery route in an existing protocol. For brevity, details are not described herein. The L2 MTU field in the EVPN layer 2 attributes extended community (EVPN Layer 2 Attributes Extended Community) sent by the second network device to the first network device is set to 0x000. The control word indicator bit in the control flags field may be set to 1, to indicate that the second network device supports the control word. It is assumed that the first network device and the second network device are directly interconnected. In this case, the control flags field may be set to 0x0003. As shown in Table 1, the value corresponding to the SATOP service is 0x0011. Therefore, the value of the reserved field in the EVPN layer 2 attributes extended community (EVPN Layer 2 Attributes Extended Community) needs to be set to 0x0011. The first network device may determine, based on the value of the reserved field, that the first network device needs to negotiate the SATOP service with the second network device.

The SATOP service needs to negotiate two parameters. The two parameters are the TDM payload byte and the TDM bit-rate. As shown in Table 2, the value of the TDM payload byte is 0x04, and the value of the TDM bit-rate is 0x07. Therefore, the sub-tlv type field in the EVPN emulated parameters extended community sent by the second network device to the first network device needs to include values used to indicate the parameter types, namely, 0x04 and 0x07.

A length value of the TDM payload byte may be filled in the variable length value field in the EVPN emulated parameters extended community. A length of the length value of the TDM payload byte may be filled in the length field in the EVPN emulated parameters extended community. It is assumed that a TDM encapsulation number (TDM-encapsulation-number) is 8. In this case, the length value of the TDM payload byte filled in the variable length value field is 0x0800. Correspondingly, the length of the length value of the TDM payload byte filled in the length field is 0x04.

The TDM bit-rate may be also filled in the variable length value field. The TDM bit-rate can be fixed to 0x00000020 (A decimal value 32 indicates that a SATOP flow rate is 2 M). Correspondingly, a length of the TDM bit-rate, namely, 0x06, may also be filled in the length field.

In this way, a payload of a packet sent by each SATOP service on a network side is 2048 bytes, a sending rate is 1000 packets per second (Packets per Second, pps), and a traffic size is 2 M.

In this case, content of the EVPN emulated parameters extended community may be shown in FIG. 9.

It is assumed that the first network device performs the SATOP service negotiation with the second network device by using the method shown in FIG. 6.

As shown in Table 1, the value corresponding to the SATOP service is 0x0011. Therefore, a value carried in the encapType field in the EVPN NLRI that is dedicated for the service negotiation route and that is sent by the second network device to the first network device is 0x0011.

A value of the control flags field in the EVPN emulated parameters extended community sent by the second network device to the first network device is 0x0003. The sub-tlv type field in the EVPN emulated parameters extended community sent by the second network device to the first network device needs to include the values used to indicate the parameter types, namely, 0x04 and 0x07. It is also assumed that the TDM encapsulation number (TDM-encapsulation-number) is 8. In this case, the length value of the TDM payload byte filled in the variable length value field in the EVPN emulated parameters extended community is 0x0800. Correspondingly, the length of the length value of the TDM payload byte filled in the length field is 0x04. The TDM bit-rate may be also filled in the variable length value field. The TDB bit-rate may be fixed to 0x00000020. Correspondingly, the length of the TDM bit-rate, namely, 0x06, may also be filled in the length field.

In this case, the EVPN emulated parameters extended community sent by the second network device to the first network device may be shown in FIG. 10.

When determining that the first network device also supports the control word and that the service type of the first network device is also the SATOP, and when a TDM payload byte and a TDM bit-rate that are of the first network device are the same as the TDM payload byte and the TDM bit rate that are carried in the EVPN emulated parameters extended community shown in FIG. 9 or FIG. 10, the first network device determines that the SATOP service negotiation with the second network device succeeds. If any one of the foregoing content is different, the first network device may determine that the SATOP service negotiation with the second network device fails.

The following uses the ATM transparent cell transport (ATM transparent cell transport) service as an example to describe the non-Ethernet service negotiation process between the first network device and the second network device with reference to the methods in FIG. 2 and FIG. 6.

It is assumed that the first network device performs ATM transparent cell transport negotiation with the second network device by using the method shown in FIG. 2.

The specific content of each field in the EVPN network layer reachability information (Network Layer Reachability Information NLRI) dedicated for the Ethernet auto-discovery route sent by the second network device to the first network device is consistent with the specific content of each field in the EVPN NLRI dedicated for the Ethernet auto-discovery route in the existing protocol. For brevity, details are not described herein. The L2 MTU field in the EVPN layer 2 attributes extended community (EVPN Layer 2 Attributes Extended Community) sent by the second network device to the first network device is set to 0x000. The control word indicator bit in the control flags field may be set to 1, to indicate that the second network device supports the control word. It is assumed that the first network device and the second network device are directly interconnected. In this case, the control flags field may be set to 0x0003. As shown in Table 1, the value corresponding to the ATM transparent cell transport service is 0x0003. Therefore, the value of the reserved field in the EVPN layer 2 attributes extended community (EVPN Layer 2 Attributes Extended Community) needs to be set to 0x0003. The first network device may determine, based on the value of the reserved field, that the first network device needs to negotiate the ATM transparent cell transport service with the second network device.

Only one parameter, namely, the maximum number of concatenated ATM cells, needs to be negotiated for the ATM transparent cell transport. As shown in Table 2, the value of the maximum number of concatenated ATM cells is 0x02. Therefore, the sub-tlv type field in the EVPN emulated parameters extended community sent by the second network device to the first network device needs to include the value used to indicate the parameter type, namely, 0x02.

The maximum number of concatenated ATM cells may be filled in the variable length value field in the EVPN emulated parameters extended community. A length of the maximum number of concatenated ATM cells may be filled in the length field in the EVPN emulated parameters extended community. It is assumed that a quantity of cell concatenation is 16. In this case, the maximum number of concatenated ATM cells filled in the variable length value field is 0x0010. Correspondingly, the length of the maximum number of concatenated ATM cells filled in the length field is 0x04.

In this case, content of the EVPN emulated parameters extended community may be shown in FIG. 11.

It is assumed that the first network device performs the ATM transparent cell transport negotiation with the second network device by using the method shown in FIG. 6.

As shown in Table 1, the value corresponding to the ATM transparent cell transport service is 0x0003. Therefore, the value carried in the encapType field in the EVPN NLRI that is dedicated for the service negotiation route and that is sent by the second network device to the first network device is 0x0003.

The value of the control flags field in the EVPN emulated parameters extended community sent by the second network device to the first network device is 0x0003. The sub-tlv type field in the EVPN emulated parameters extended community sent by the second network device to the first network device needs to include the value used to indicate the parameter type, namely, 0x02. It is also assumed that the quantity of cell concatenation is 16. In this case, the maximum number of concatenated ATM cells filled in the variable length value field is 0x0010. Correspondingly, the length of the maximum number of concatenated ATM cells filled in the length field is 0x04.

In this case, content of the EVPN emulated parameters extended community may be shown in FIG. 12.

When determining that the first network device also supports the control word, and the service type of the first network device is also the ATM transparent cell transport, the first network device may determine that the ATM transparent cell transport service negotiation with the second device succeeds. If any one of the foregoing content is different, the first network device may determine that the ATM transparent cell transport service negotiation with the second network device fails. Whether a maximum number of concatenated ATM cells of the first network device is the same as the maximum number of concatenated ATM cells carried in the EVPN emulated parameters extended community shown in FIG. 11 or FIG. 12 does not affect a negotiation result. In some implementations, the EVPN emulated parameters extended community may not carry the maximum number of concatenated ATM cells.

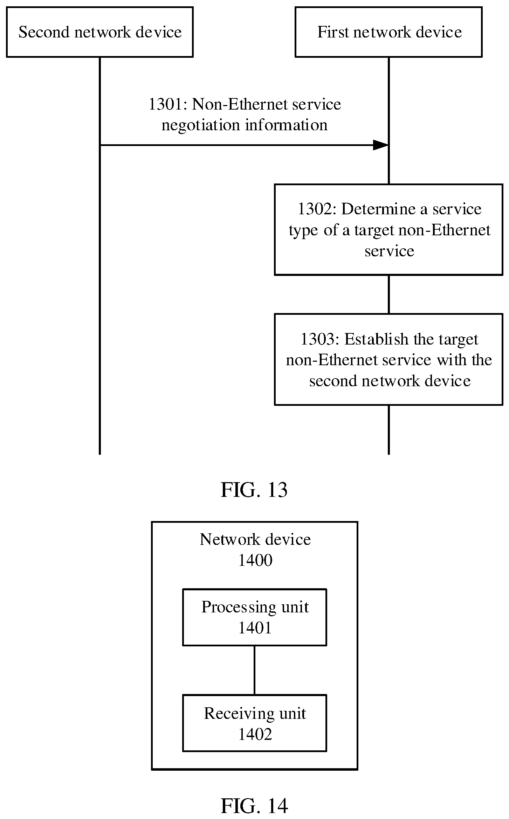

FIG. 13 is a schematic flowchart of a method for establishing a non-Ethernet service according to an embodiment of this application.

1301: A first network device receives a border gateway protocol BGP message sent by a second network device, where the BGP message carries Ethernet virtual private network EVPN routing information, the EVPN routing information includes first indication information, the first indication information is used to indicate a service type of a target non-Ethernet service, and the target non-Ethernet service is a non-Ethernet service expected to be established by the second network device.

1302: The first network device determines the service type of the target non-Ethernet service based on the first indication information.

1303: The first network device establishes the target non-Ethernet service with the second network device based on the service type of the target non-Ethernet service.

In the foregoing technical solution, a non-Ethernet service negotiation process is performed by using a protocol of an Ethernet service, and the non-Ethernet service is established. In this way, a network device in a system can support non-Ethernet service negotiation when only the related protocol supporting the Ethernet service is configured. Therefore, the foregoing technical solution can reduce service negotiation costs and implement flexible negotiation.

In a specific implementation, in some embodiments, the EVPN routing information further includes EVPN network layer reachability information NLRI, and the EVPN NLRI is used to advertise an Ethernet auto-discovery route. In other words, the EVPN NLRI may be the EVPN NLRI dedicated for the Ethernet auto-discovery route in the method shown in FIG. 2.

The EVPN NLRI used in the foregoing technical solution is existing EVPN NLRI dedicated for the Ethernet auto-discovery route. In other words, the foregoing technical solution reuses the existing EVPN NLRI dedicated for the Ethernet auto-discovery route as EVPN NLRI used for the non-Ethernet service negotiation. Therefore, the foregoing technical solution makes a relatively small change to an existing protocol, so that the existing network device supports a non-Ethernet service negotiation method proposed in this application.

In some embodiments, the EVPN routing information includes an EVPN layer 2 attributes extended community, and the EVPN layer 2 attributes extended community is used to carry the first indication information.

The foregoing technical solution reuses a reserved field of an existing EVPN layer 2 attributes extended community to perform the non-Ethernet service negotiation and indicate a service type of a non-Ethernet service that needs to be negotiated. Therefore, the foregoing technical solution makes a relatively small change to an existing protocol, so that the existing network device supports a non-Ethernet service negotiation method proposed in this application.

In some embodiments, the EVPN routing information includes EVPN NLRI, the EVPN NLRI is used to advertise a service negotiation route, and the EVPN NLRI is used to carry the first indication information. In other words, the EVPN NLRI may be the EVPN NLRI dedicated for the service negotiation route in the method shown in FIG. 6.

In the foregoing technical solution, the newly added and dedicated EVPN NLRI is used to perform non-Ethernet service negotiation and indicate a service type of a non-Ethernet service that needs to be negotiated. An additional extended community does not need to be used to perform the non-Ethernet service negotiation and indicate the service type of the non-Ethernet service that needs to be negotiated. Therefore, the foregoing technical solution can reduce signaling overheads, thereby improving a negotiation speed of the non-Ethernet service.

In some embodiments, a route type (route type) field in the EVPN NLRI indicates that a type of a route advertised by the EVPN NLRI is the service negotiation route.

In some embodiments, the EVPN NLRI includes a route distinguisher field, an encapsulation type field, an encapsulation service ID field, and a multi-protocol label switching label field. The encapsulation type field is used to carry the first indication information. The route distinguisher field, the encapsulation type field, the encapsulation service ID field, and the multi-protocol label switching label field may be content in a value (Value) field in a TLV structure. The foregoing route type field used to indicate the type of the route advertised by the EVPN NLRI may be a type field in the TLV field.

In some embodiments, the EVPN routing information further includes second indication information, and the second indication information is used to indicate service parameters of the target non-Ethernet service. That the first network device establishes the target non-Ethernet service with the second network device based on the service type of the target non-Ethernet service includes: The first network device establishes the target non-Ethernet service with the second network device based on the service type of the target non-Ethernet service and the service parameters of the target non-Ethernet service.

In some embodiments, the EVPN routing information includes an EVPN emulated parameters extended community, and the EVPN emulated parameters extended community carries the second indication information.

In some embodiments, the EVPN routing information further includes third indication information, and the third indication information is used to indicate whether the target non-Ethernet service supports a control word. Before the first network device establishes the target non-Ethernet service with the second network device, the method further includes: The first network device determines that both the target non-Ethernet service and a non-Ethernet service expected to be established by the first network device support the control word, or neither the target non-Ethernet service nor a non-Ethernet service expected to be established by the first network device supports the control word.

In some embodiments, the third indication information is carried by the EVPN layer 2 attributes extended community.

The foregoing technical solution reuses the existing EVPN layer 2 attributes extended community to carry the third indication information. Therefore, the foregoing technical solution makes a relatively small change to an existing protocol, so that the existing network device supports a non-Ethernet service negotiation method proposed in this application. In addition, the third indication information and the first indication information may be carried by a same extended community. Therefore, the signaling overheads can be reduced.

In some embodiments, the third indication information is carried by the EVPN emulated parameters extended community. In the foregoing technical solution, a same extended community is used to carry the second indication information and the third indication information, so that the signaling overheads can be reduced.

In some embodiments, that the first network device establishes the target non-Ethernet service with the second network device based on the service type of the target non-Ethernet service includes: When determining that the service type of the target non-Ethernet service is the same as the service type of the non-Ethernet service expected to be established by the first network device, the first network device establishes the target non-Ethernet service with the second network device.

In some embodiments, that the first network device establishes the target non-Ethernet service with the second network device based on the service type of the target non-Ethernet service and the service parameters of the target non-Ethernet service includes: When determining that the service type of the target non-Ethernet service is the same as the service type of the non-Ethernet service expected to be established by the first network device, and the parameters of the target non-Ethernet service are the same as parameters of the non-Ethernet service expected to be established by the first network device, the first network device establishes the target non-Ethernet service with the second network device.

For specific content and functions of non-Ethernet service negotiation information, refer to descriptions in the methods shown in FIG. 2 to FIG. 6, FIG. 3 to FIG. 6, and FIG. 7 to FIG. 12. For a specific process in which the first network device performs the non-Ethernet service negotiation with the second network device, refer to descriptions in the methods shown in FIG. 2 and FIG. 6. It may be understood that the target non-Ethernet service in the method shown in FIG. 13 is equivalent to the second non-Ethernet service in the methods shown in FIG. 2 and FIG. 6.

It may be understood that, in the method shown in FIG. 2, the first indication information is carried by the EVPN layer 2 attributes extended community. In some other implementations, the first indication information may alternatively be carried by another extended community other than the EVPN layer 2 attributes extended community. For example, the first indication information may be carried by a newly set extended community. Alternatively, in some other embodiments, the first indication information may be carried by information other than the extended community. For brevity, details are not described herein.

Similarly, in the methods shown in FIG. 2 and FIG. 6, the second indication information is carried by the EVPN emulated parameters extended community. In some other implementations, the first indication information may alternatively be carried by another extended community other than the EVPN emulated parameters extended community. For example, the first indication information may be carried by a newly set extended community. Alternatively, in some other embodiments, the first indication information may be carried by information other than the extended community. For brevity, details are not described herein.

In the methods shown in FIG. 2 and FIG. 6, the third indication information is the control word indicator bit in the control flags field. More specifically, in the method shown in FIG. 2, the third indication information is the control word indicator bit of the control flags field in the EVPN layer 2 attributes extended community. Correspondingly, the first network device obtains the third indication information by obtaining the control flags field in the EVPN layer 2 attributes extended community. In the method shown in FIG. 6, the third indication information is the control word indicator bit of the control flags field in the EVPN emulated parameters extended community. Correspondingly, the first network device obtains the third indication information by obtaining the control flags field in the EVPN emulated parameters extended community. Similarly, in other possible implementations, the third indication information may be carried by using an extended community other than the EVPN layer 2 attributes extended community or the EVPN emulated parameters extended community. For example, the third indication information may be carried by a newly set extended community. Alternatively, in some other embodiments, the third indication information may be carried by information other than the extended community. For brevity, details are not described herein. In addition, in some other embodiments, the third indication information may be not limited to the control word indicator bit in the control flags field. For example, the third indication information may be a separate field, and the field is used to indicate whether the target non-Ethernet service supports the control word. In addition, the third indication information may be indicated by not limited to one bit. The third indication information may include two or more bits.

FIG. 14 is a schematic structural diagram of a network device according to an embodiment of this application. The network device may be the first network device in the foregoing method. As shown in FIG. 14, a communication apparatus 1400 may include a processing unit 1401 and a receiving unit 1402.

The receiving unit 1402 is configured to receive a border gateway protocol BGP message sent by a second network device, where the BGP message carries Ethernet virtual private network EVPN routing information, the EVPN routing information includes first indication information, the first indication information is used to indicate a service type of a target non-Ethernet service, and the target non-Ethernet service is a non-Ethernet service expected to be established by the second network device.

The processing unit 1401 is configured to determine the service type of the target non-Ethernet service based on the first indication information.

The processing unit 1401 is further configured to establish the target non-Ethernet service with the second network device based on the service type of the target non-Ethernet service.

In a possible manner, the processing unit 1401 may be implemented by a processor, and the receiving unit 1402 may be implemented by a receiver. For specific functions and beneficial effects of the processing unit 1401 and the receiving unit 1402, refer to descriptions in the foregoing method. For brevity, details are not described herein again.

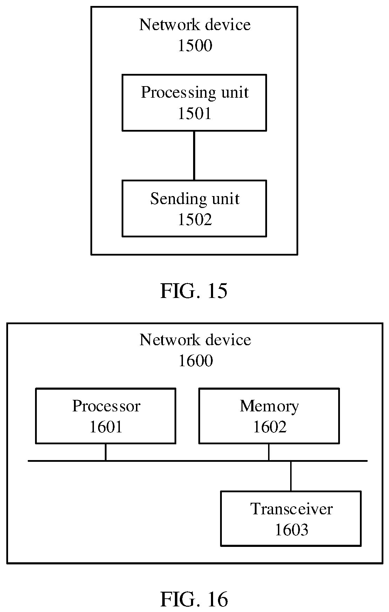

FIG. 15 is a schematic structural diagram of a network device according to an embodiment of this application. The network device may be the second network device in the foregoing method, or may be a component (for example, a chip or a circuit) that may be used in the second network device in the foregoing method. As shown in FIG. 15, a communication apparatus 1500 may include a processing unit 1501 and a sending unit 1502.

The processing unit 1501 is configured to determine a border gateway protocol BGP message, where the BGP message carries Ethernet virtual private network EVPN routing information, the EVPN routing information includes first indication information, and the first indication information is used to indicate a service type of a target non-Ethernet service. The target non-Ethernet service is a non-Ethernet service that the second network device expected to be established with a first network device.

The sending unit 1502 is configured to send the BGP message to the first network device.

In a possible manner, the processing unit 1501 may be implemented by a processor, and the sending unit 1502 may be implemented by a transmitter. For specific functions and beneficial effects of the processing unit 1501 and the sending unit 1502, refer to the foregoing method. For brevity, details are not described herein again.

FIG. 16 is a structural block diagram of a network device according to an embodiment of this application. As shown in FIG. 16, the network device includes a processor 1601, a memory 1602, and a transceiver 1603. The processor 1601 may be configured to process a communication protocol and communication data, control the network device, execute a software program, process data of the software program, and the like. The memory 1602 is mainly configured to store the software program and data. The transceiver 1603 is configured to receive information sent by another device (for example, a PE device, a P device, or a CE device), or send information to another device.

For ease of description, only one memory and one processor are shown in FIG. 16. In an actual network device product, there may be one or more processors and one or more memories. The memory may also be referred to as a storage medium, a storage device, or the like. The memory may be disposed independent of the processor, or may be integrated into the processor. This is not limited in this embodiment of this application.

The transceiver may also be referred to as a transceiver unit, a transceiver machine, a transceiver apparatus, or the like. The processing unit may also be referred to as a processor, a processing board, a processing module, a processing apparatus, or the like. A component that is in the transceiver 1603 and that is configured to implement a receiving function may be considered as a receiving unit, and a component that is in the transceiver 1603 and that is configured to implement a sending function may be considered as a sending unit. In other words, the transceiver 1603 includes the receiving unit and the sending unit. The receiving unit may also be sometimes referred to as a receiving machine, a receiver, a receiver circuit, or the like. The sending unit may also be sometimes referred to as a transmitter machine, a transmitter, a transmitter circuit, or the like.

The processor 1601, the memory 1602, and the transceiver 1603 communicate with each other through an internal connection path, to transfer a control and/or data signal.

The methods disclosed in the foregoing embodiments of this application may be applied to the processor 1601, or may be implemented by the processor 1601. The processor 1601 may be an integrated circuit chip and has a signal processing capability. In an implementation process, steps in the foregoing methods can be implemented by using a hardware integrated logical circuit in the processor 1601, or by using instructions in a form of software.

The processor in the embodiments of this application may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. The software module may be located in a mature computer-readable storage medium in the art, for example, a random access memory (random access memory, RAM), a flash memory, a read-only memory (read-only memory, ROM), a programmable read-only memory, an electrically erasable programmable memory, a register, or the like. The computer-readable storage medium is located in the memory, and the processor reads instructions in the memory, and completes the steps of the foregoing methods in combination with hardware of the processor.

In some embodiments, the memory 1602 may store instructions for performing the method performed by the first network device in the method shown in FIG. 2, FIG. 3, and/or FIG. 6. The processor 1601 may execute the instructions stored in the memory 1602 and complete, in combination with other hardware (for example, the transceiver 1603), the steps performed by the first network device in the corresponding method. For a specific working process and beneficial effects, refer to the descriptions in the foregoing embodiments.

In some embodiments, the memory 1602 may store instructions for performing the method performed by the second network device in the method shown in FIG. 2, FIG. 3, and/or FIG. 6. The processor 1601 may execute the instructions stored in the memory 1602 and complete, in combination with other hardware (for example, the transceiver 1603), the steps performed by the second network device in the corresponding method. For a specific working process and beneficial effects, refer to the descriptions in the foregoing embodiments.

In some embodiments, the memory 1602 may store instructions for performing the method performed by the first network device and the second network device in the method shown in FIG. 2, FIG. 3, and/or FIG. 6. The processor 1601 may execute the instructions stored in the memory 1602 and complete, in combination with other hardware (for example, the transceiver 1603), the steps performed by the first network device or the steps performed by the second network device in the corresponding method. For a specific working process and beneficial effects, refer to the descriptions in the foregoing embodiments.

An embodiment of this application further provides a chip, where the chip includes a transceiver unit and a processing unit. The transceiver unit may be an input/output circuit or a communication interface. The processing unit is a processor, a microprocessor, or an integrated circuit integrated on the chip. The chip may perform the method performed by the first network device in the foregoing method embodiments.

An embodiment of this application further provides a chip, where the chip includes a transceiver unit and a processing unit. The transceiver unit may be an input/output circuit or a communication interface. The processing unit is a processor, a microprocessor, or an integrated circuit integrated on the chip. The chip may perform the method performed by the second network device in the foregoing method embodiments.

An embodiment of this application further provides a computer-readable storage medium, where the computer-readable storage medium stores instructions, and when the instructions are executed, the method performed by the first network device in the foregoing method embodiments is performed.

In another form of this embodiment, a computer-readable storage medium is provided. The computer-readable storage medium stores instructions. When the instructions are executed, the method performed by the second network device in the foregoing method embodiments is performed.

An embodiment of this application further provides a computer program product including instructions. When the instructions are executed, the method performed by the first network device in the foregoing method embodiments is performed.

In another form of this embodiment, a computer program product that includes instructions is provided. When the instructions are executed, the method performed by the second network device in the foregoing method embodiments is performed.

An embodiment of this application further provides a communication system. The communication system includes a first network device and a second network device.

In some embodiments, the first network device in the communication system may be configured to perform steps performed by the first network device in the method shown in FIG. 13. The second network device in the communication system may be configured to perform steps performed by the second network device in the method shown in FIG. 13.

In some embodiments, the first network device in the communication system may be configured to perform steps performed by the first network device in the method shown in FIG. 2. The second network device in the communication system may be configured to perform steps performed by the second network device in the method shown in FIG. 2.

In some embodiments, the first network device in the communication system may be configured to perform steps performed by the first network device in the method shown in FIG. 6. The second network device in the communication system may be configured to perform steps performed by the second network device in the method shown in FIG. 6.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraints of the technical solutions. The person skilled in the art may use different methods to implement the described functions for each particular application, but it should not be considered that the implementation goes beyond the scope of this application.

It may be clearly understood by the person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by the person skilled in the art within the technical scope disclosed in this application shall fall within the protection scope of this application. Therefore, the protection scope of this application shall be subject to the protection scope of the claims.

## Claims

1. A method for establishing a non-Ethernet service, comprising:
receiving (1301), by a first network device, a border gateway protocol, BGP, message sent by a second network device,
wherein the BGP message carries Ethernet virtual private network, EVPN, routing information, the EVPN routing information comprises first indication information, the first indication information is used to indicate a service type of a target non-Ethernet service, wherein the EVPN routing information further comprises an EVPN layer 2 attributes extended community, and the EVPN layer 2 attributes extended community comprises a reserved field, the first indication information is carried in the reserved field;
establishing (1303), by the first network device, the target non-Ethernet service with the second network device based on the service type of the target non-Ethernet service.

2. The method according to claim 1, wherein the EVPN routing information further comprises EVPN network layer reachability information, NLRI, and the EVPN NLRI is used to advertise an Ethernet auto-discovery route.

3. The method according to claim 1 or 2, wherein the EVPN routing information comprises an EVPN layer 2 attributes extended community, and the EVPN layer 2 attributes extended community is used to carry the first indication information.

4. The method according to claim 1, wherein the EVPN routing information comprises EVPN NLRI, the EVPN NLRI is used to advertise a service negotiation route, and the EVPN NLRI is used to carry the first indication information.

5. The method according to any one of claims 1 to 4, wherein the EVPN routing information further comprises second indication information, and the second indication information is used to indicate service parameters of the target non-Ethernet service.

6. The method according to claim 5, wherein the EVPN routing information comprises an EVPN emulated parameters extended community, and the EVPN emulated parameters extended community carries the second indication information.

7. A method for establishing a non-Ethernet service, comprising:
determining, by a second network device, a border gateway protocol, BGP, message, wherein the BGP message carries Ethernet virtual private network, EVPN, routing information, the EVPN routing information comprises first indication information, the first indication information is used to indicate a service type of a target non-Ethernet service, wherein the EVPN routing information further comprises an EVPN layer 2 attributes extended community, and the EVPN layer 2 attributes extended community comprises a reserved field, the first indication information is carried in the reserved field; and
sending (1301), by the second network device, the BGP message to the first network device.

8. The method according to claim 7, wherein the EVPN routing information comprises EVPN network layer reachability information, NLRI, and the EVPN NLRI is used to advertise an Ethernet auto-discovery route.

9. The method according to claim 7 or 8, wherein the EVPN routing information comprises an EVPN layer 2 attributes extended community, and the EVPN layer 2 attributes extended community is used to carry the first indication information.

10. The method according to claim 7, wherein the EVPN routing information comprises EVPN NLRI, the EVPN NLRI is used to advertise a service negotiation route, and the EVPN NLRI is used to carry the first indication information.

11. The method according to any one of claims 7 to 10, wherein the EVPN routing information further comprises second indication information, and the second indication information is used to indicate service parameters of the target non-Ethernet service.

12. The method according to any one of claims 7 to 11, wherein the EVPN routing information further comprises third indication information, and the third indication information is used to indicate whether the target non-Ethernet service supports a control word.

13. A network device, wherein the network device is configure to implement to the method of any one of claims 1 to 6.

14. A network device, wherein the network device is configure to implement to the method of any one of claims 7 to 12.

15. A computer-readable storage medium, wherein the computer-readable storage medium stores instructions for performing the method according to any one of claims 1 to 6 or 7 to 12.

## Patentansprüche

1. Verfahren zum Einrichten eines Nicht-Ethernet-Dienstes, das umfasst:
Empfangen (1301), durch eine erste Netzwerkvorrichtung, einer durch eine zweite Netzwerkvorrichtung gesendete Border Gateway Protocol(BGP)-Nachricht, wobei die BGP-Nachricht Routing-Informationen für ein virtuelles privates Ethernet-Netzwerk (EVPN) enthält, die EVPN-Routing-Informationen erste Anzeigeinformationen umfassen, die ersten Anzeigeinformationen verwendet werden, um einen Diensttyp eines Ziel-Nicht-Ethernet-Dienstes anzuzeigen, wobei die EVPN-Routing-Informationen ferner eine erweiterte Community mit EVPN-Schicht-2-Attributen umfassen und die erweiterte Community mit EVPN-Schicht-2-Attributen ein reserviertes Feld umfasst, die ersten Anzeigeinformationen in dem reservierten Feld enthalten sind;
Einrichten (1303), durch die erste Netzwerkvorrichtung, des Ziel-Nicht-Ethernet-Dienstes mit der zweiten Netzwerkvorrichtung basierend auf dem Diensttyp des Ziel-Nicht-Ethernet-Dienstes.

2. Verfahren nach Anspruch 1, wobei die EVPN-Routing-Informationen ferner EVPN-Netzwerkschicht-Erreichbarkeitsinformationen (NLRI) umfassen und die EVPN-NLRI verwendet werden, um eine Ethernet-Auto-Discovery-Route anzukündigen.

3. Verfahren nach Anspruch 1 oder 2, wobei die EVPN-Routing-Informationen eine erweiterte Community mit EVPN-Schicht-2-Attributen umfassen und die erweiterte Community mit EVPN-Schicht-2-Attributen verwendet wird, um die ersten Anzeigeinformationen zu enthalten.

4. Verfahren nach Anspruch 1, wobei die EVPN-Routing-Informationen EVPN-NLRI umfassen, die EVPN-NLRI verwendet werden, um eine Dienstverhandlungsroute anzukündigen, und die EVPN-NLRI verwendet werden, um die ersten Anzeigeinformationen zu enthalten.

5. Verfahren nach einem der Ansprüche 1 bis 4, wobei die EVPN-Routing-Informationen ferner zweite Anzeigeinformationen umfassen und die zweiten Anzeigeinformationen verwendet werden, um Dienstparameter des Ziel-Nicht-Ethernet-Dienstes anzuzeigen.

6. Verfahren nach Anspruch 5, wobei die EVPN-Routing-Informationen eine erweiterte Community mit emulierten EVPN-Parametern umfassen und die erweiterte Community mit emulierten EVPN-Parametern die zweiten Anzeigeinformationen enthält.

7. Verfahren zum Einrichten eines Nicht-Ethernet-Dienstes, das umfasst:
Bestimmen, durch eine zweite Netzwerkvorrichtung, einer Border Gateway Protocol(BGP)-Nachricht, wobei die BGP-Nachricht Routing-Informationen für ein virtuelles privates Ethernet-Netzwerk (EVPN) enthält, die EVPN-Routing-Informationen erste Anzeigeinformationen umfassen, die ersten Anzeigeinformationen verwendet werden, um einen Diensttyp eines Ziel-Nicht-Ethernet-Dienstes anzuzeigen, wobei die EVPN-Routing-Informationen ferner eine erweiterte Community mit EVPN-Schicht-2-Attributen umfassen und die erweiterte Community mit EVPN-Schicht-2-Attributen ein reserviertes Feld umfasst, die ersten Anzeigeinformationen in dem reservierten Feld enthalten sind; und
Senden (1301), durch die zweite Netzwerkvorrichtung, der BGP-Nachricht an die erste Netzwerkvorrichtung.

8. Verfahren nach Anspruch 7, wobei die EVPN-Routing-Informationen EVPN-Netzwerkschicht-Erreichbarkeitsinformationen (NLRI) umfassen und die EVPN-NLRI verwendet werden, um eine Ethernet-Auto-Discovery-Route anzukündigen.

9. Verfahren nach Anspruch 7 oder 8, wobei die EVPN-Routing-Informationen eine erweiterte Community mit EVPN-Schicht-2-Attributen umfassen und die erweiterte Community mit EVPN-Schicht-2-Attributen verwendet wird, um die ersten Anzeigeinformationen zu enthalten.

10. Verfahren nach Anspruch 7, wobei die EVPN-Routing-Informationen EVPN-NLRI umfassen, die EVPN-NLRI verwendet werden, um eine Dienstverhandlungsroute anzukündigen, und die EVPN-NLRI verwendet werden, um die ersten Anzeigeinformationen zu enthalten.

11. Verfahren nach einem der Ansprüche 7 bis 10, wobei die EVPN-Routing-Informationen ferner zweite Anzeigeinformationen umfassen und die zweiten Anzeigeinformationen verwendet werden, um Dienstparameter des Ziel-Nicht-Ethernet-Dienstes anzuzeigen.

12. Verfahren nach einem der Ansprüche 7 bis 11, wobei die EVPN-Routing-Informationen ferner dritte Anzeigeinformationen umfassen und die dritten Anzeigeinformationen verwendet werden, um anzuzeigen, ob der Ziel-Nicht-Ethernet-Dienst ein Steuerwort unterstützt.

13. Netzwerkvorrichtung, wobei die Netzwerkvorrichtung konfiguriert ist, um das Verfahren nach einem der Ansprüche 1 bis 6 zu implementieren.

14. Netzwerkvorrichtung, wobei die Netzwerkvorrichtung konfiguriert ist, um das Verfahren nach einem der Ansprüche 7 bis 12 zu implementieren.

15. Computerlesbares Speichermedium, wobei das computerlesbare Speichermedium Anweisungen zum Ausführen des Verfahrens nach einem der Ansprüche 1 bis 6 oder 7 bis 12 speichert.

## Revendications

1. Procédé pour l'établissement d'un service non Ethernet, comprenant :
la réception (1301), par un premier dispositif réseau, d'un message de protocole de passerelle frontière, BGP, envoyé par un second dispositif réseau, dans lequel le message BGP transporte des informations de routage de réseau privé virtuel Ethernet, EVPN, les informations de routage d'EVPN comprennent de premières informations d'indication, les premières informations d'indication sont utilisées pour indiquer un type de service d'un service non Ethernet cible, dans lequel les informations de routage d'EVPN comprennent en outre une communauté étendue d'attributs de couche 2 d'EVPN, et la communauté étendue d'attributs de couche 2 d'EVPN comprend un champ réservé, les premières informations d'indication sont transportées dans le champ réservé ;
l'établissement (1303), par le premier dispositif réseau, du service non Ethernet cible avec le second dispositif réseau sur la base du type de service du service non Ethernet cible.

2. Procédé selon la revendication 1, dans lequel les informations de routage d'EVPN comprennent en outre des informations d'accessibilité de couche réseau, NLRI, d'EVPN et les NLRI d'EVPN sont utilisées pour annoncer une route de découverte automatique Ethernet.

3. Procédé selon la revendication 1 ou 2, dans lequel les informations de routage d'EVPN comprennent une communauté étendue d'attributs de couche 2 d'EVPN, et la communauté étendue d'attributs de couche 2 d'EVPN est utilisée pour transporter les premières informations d'indication.

4. Procédé selon la revendication 1, dans lequel les informations de routage d'EVPN comprennent des NLRI d'EVPN, les NLRI d'EVPN sont utilisées pour annoncer une route de négociation de service, et les NLRI d'EVPN sont utilisées pour transporter les premières informations d'indication.

5. Procédé selon l'une quelconque des revendications 1 à 4, dans lequel les informations de routage d'EVPN comprennent en outre de deuxièmes informations d'indication, et les deuxièmes informations d'indication sont utilisées pour indiquer des paramètres de service du service non Ethernet cible.

6. Procédé selon la revendication 5, dans lequel les informations de routage d'EVPN comprennent une communauté étendue de paramètres émulés d'EVPN, et la communauté étendue de paramètres émulés d'EVPN transporte les deuxièmes informations d'indication.

7. Procédé pour l'établissement d'un service non Ethernet, comprenant :
la détermination, par un second dispositif réseau, d'un message de protocole de passerelle frontière, BGP, dans lequel le message BGP transporte des informations de routage de réseau privé virtuel Ethernet, EVPN, les informations de routage d'EVPN comprennent de premières informations d'indication, les premières informations d'indication sont utilisées pour indiquer un type de service d'un service non Ethernet cible, dans lequel les informations de routage d'EVPN comprennent en outre une communauté étendue d'attributs de couche 2 d'EVPN, et la communauté étendue d'attributs de couche 2 d'EVPN comprend un champ réservé, les premières informations d'indication sont transportées dans le champ réservé ; et l'envoi (1301), par le second dispositif réseau, du message BGP au premier dispositif réseau.

8. Procédé selon la revendication 7, dans lequel les informations de routage d'EVPN comprennent des informations d'accessibilité de couche réseau, NLRI, d'EVPN et les NLRI d'EVPN sont utilisées pour annoncer une route de découverte automatique Ethernet.

9. Procédé selon la revendication 7 ou 8, dans lequel les informations de routage d'EVPN comprennent une communauté étendue d'attributs de couche 2 d'EVPN, et la communauté étendue d'attributs de couche 2 d'EVPN est utilisée pour transporter les premières informations d'indication.

10. Procédé selon la revendication 7, dans lequel les informations de routage d'EVPN comprennent des NLRI d'EVPN, les NLRI d'EVPN sont utilisées pour annoncer une route de négociation de service, et les NLRI d'EVPN sont utilisées pour transporter les premières informations d'indication.

11. Procédé selon l'une quelconque des revendications 7 à 10, dans lequel les informations de routage d'EVPN comprennent en outre de deuxièmes informations d'indication, et les deuxièmes informations d'indication sont utilisées pour indiquer des paramètres de service du service non Ethernet cible.

12. Procédé selon l'une quelconque des revendications 7 à 11, dans lequel les informations de routage d'EVPN comprennent en outre de troisièmes informations d'indication, et les troisièmes informations d'indication sont utilisées pour indiquer si le service non Ethernet cible prend en charge ou non un mot de commande.

13. Dispositif réseau, dans lequel le dispositif réseau est configuré pour mettre en œuvre le procédé selon l'une quelconque des revendications 1 à 6.

14. Dispositif réseau, dans lequel le dispositif réseau est configuré pour mettre en œuvre le procédé selon l'une quelconque des revendications 7 à 12.

15. Support de stockage lisible par ordinateur, dans lequel le support de stockage lisible par ordinateur stocke des instructions permettant de réaliser le procédé selon l'une quelconque des revendications 1 à 6 ou 7 à 12.
